(19) **Europäisches Patentamt / European Patent Office / Office européen des brevets**

(11) **EP 1 269 155 B1**

(12) **EUROPÄISCHE PATENTSCHRIFT**

(45) Veröffentlichungstag und Bekanntmachung des Hinweises auf die Patenterteilung:
**25.04.2007 Patentblatt 2007/17**

(21) Anmeldenummer: **01936137.7**

(22) Anmeldetag: **24.03.2001**

(51) Int Cl.:
*G01N 21/47* (2006.01)    *G01N 21/41* (2006.01)

(86) Internationale Anmeldenummer:
**PCT/EP2001/003386**

(87) Internationale Veröffentlichungsnummer:
**WO 2001/073404 (04.10.2001 Gazette 2001/40)**

(54) **VERFAHREN ZUR BRECHZAHLBESTIMMUNG**

METHOD FOR DETERMINING AN INDEX OF REFRACTION

PROCEDE DE DETERMINATION DE L'INDICE DE REFRACTION

(84) Benannte Vertragsstaaten:
**AT BE CH CY DE DK ES FI FR GB GR IE IT LI LU MC NL PT SE TR**

(30) Priorität: **27.03.2000 DE 10014816**

(43) Veröffentlichungstag der Anmeldung:
**02.01.2003 Patentblatt 2003/01**

(73) Patentinhaber: **NaWoTec GmbH
64380 Rossdorf (DE)**

(72) Erfinder:
• **KOOPS, Hans, W., P.
64372 Ober-Ramstadt (DE)**

• **LEMINGER, Ottokar
64283 Darmstadt (DE)**
• **KAYA, Alexander
64380 Rossdorf (DE)**

(74) Vertreter: **Borchert, Uwe Rudolf
Puschmann & Borchert
Patentanwälte
European Patent Attorneys
Postfach 10 12 31
80086 München (DE)**

(56) Entgegenhaltungen:
**DE-A- 4 018 664      DE-A- 19 824 624
US-A- 5 337 185      US-A- 5 365 541
US-A- 5 910 842      US-A- 6 002 522**

EP 1 269 155 B1

**EP 1 269 155 B1**

**Beschreibung**

Die Erfindung betrifft ein Verfahren zur Bestimmung eines Brechungsindex, insbesondere bei kleinsten Materialmengen bzw. Materialstrukturen nach Anspruch 1.

Es sind Verfahren zur Bestimmung der Brechzahl bekannt. Bei diesen wird typischerweise die Messung der Brechzahl durch Ellipsometrie oder durch Bestimmung des Grenzwinkels der Totalreflektion an Schichten oder durch andere auf der Brechung des Lichtes beruhenden Verfahren durchgeführt.

Bei kleinsten Materialmengen, deren strukturelle Abmessungen sich im Mikro- oder Nano-Bereich bewegen, versagen die bekannten Verfahren zur Brechzahlbestimmung. Zum Beispiel bei Materiemengen in Form von Stäben, deren Durchmesser unter 50 Mikrometer liegen, können die bisherigen Verfahren wegen nicht ausreichend gebündelter Erregerstrahlung und nicht entsprechend ausgeführter Detektion der gestreuten oder abgelenkten Strahlung nicht eingesetzt werden. Spezielle Schwierigkeiten entstehen, wenn die Materien nur in Mengen mit Abmessungen unterhalb der Wellenlänge vorliegen, wie dies bei neuartigen Materialien, wie zum Beispiel photonischen Kristallen, der Fall ist, welche durch additive Nanolithographie mit Korpuskularstrahl-induzierter Deposition hergestellt werden können.

Aus der DE 198 24 624 A1 ist eine Messanordnung zur optischen Diffraktionsanalyse von Proben periodischer Submikrometerstrukturen bekannt. Das Prinzip der optischen Diffraktionsanalyse besteht in der winkelaufgelösten Messung des an periodischen Mikrostrukturen gebeugten Lichtes (d. h. der Beugungseffizienzen in den ausbreitungsfähigen Ordnungen) bzw. des direkten Reflexes in Abhängigkeit vom Einfallswinkel. In einem zweiten Schritt werden mittels moderner Datenanalyseverfahren wie multivarianter Regression, Regression auf der Basis neuronaler Netze oder einem Vergleichstabellenprinzip die zu bestimmende Profil- und ggf. auch Materialparameter aus dem Streulichtdaten extrahiert. Die Messung erfolgt hierbei integral über mehrere Gitterperioden. Es wird in der Regel mit Strahldurchmessern zwischen 0,1 und 1 mm gearbeitet, woraus die Erfassung von ca. 100 bis 1000 Gitterperioden folgt. Dadurch ist eine starke Konzentration des gebeugten Lichtes in bestimmte Richtungen (Beugungsordnungen) gewährleistet.

In der DE 40 18 664 A1 ist ein Verfahren zur refraktometrischen Messung des Brechungsindexes eines Mediums und/oder zur Stabilisierung der Wellenlänge einer elektromagnetischen Strahlung in diesem Medium offenbart. Das Verfahren zeichnet sich dadurch aus, dass die refraktometrische Messstrecke zwischen mindestens zwei Gittern eines Mehrgitter-Interferometers liegt, deren Dimensionen von den Parametern, die den Brechungsindex des Mediums beeinflussen, unabhängig sind und dass die durch die Änderung des Brechungsindexes des Mediums hervorgerufene Änderung der Wellenlänge spektrometrisch und/oder interferometrisch gemessen oder so geregelt wird, dass die Wellenlänge der Strahlung konstant bleibt.

Der Erfindung liegt daher die Aufgabe zugrunde, eine Vorrichtung und insbesondere ein Verfahren bereitzustellen, welches unter anderem auch dazu geeignet ist, den Brechungsindex von Materialmengen oder Materialstrukturen im Mikrobereich zu bestimmen.

Gelöst wird diese Aufgabe auf höchst überraschende Weise bereits durch die Merkmale des Verfahrens gemäß Anspruch 1.

Vorteilhafte Weiterbildungen des erfindungsgemäßen Verfahrens sind in den Unteransprüchen angegeben.

Beim erfindungsgemäßen Verfahren wird zunächst die Materie, für die die Brechzahl bestimmt werden soll, in Form einer theoretisch erfassbaren Streuanordnung bzw. Beugungsanordnung bereitgestellt. Anschließend werden zwei oder mehrere Beugungsordnungen zum Bilden wenigstens eines Intensitätsverhältnisses festgelegt. Indem die Streuanordnung mit einem Lichtstrahl definierter Form bestrahlt wird, wird wenigstens eine Intensitätsverteilung erzeugt. Im Anschluss wird unter Verwendung der Beugungsordnungen der Intensitätsverteilung das Intensitätsverhältnis gebildet. Ferner wird zumindest ein Abschnitt einer Kennkurve bestimmt, die die Abhängigkeit des Intensitätsverhältnisses von der Brechzahl wiedergibt und mit deren Hilfe das bestimmte Intentsitätsverhältnis zu der zugehörigen Brechzahl zugeordnet werden kann. Ferner wird bei der Zuordnung des Intensitätsverhältnisses zu einer Brechzahl geprüft, ob das gebildete Intensitätsverhältnis vermittels der Kennkurve eindeutig einer Brechzahl zugeordnet werden kann. Wenn dies nicht der Fall sein sollte, sind die Schritte des Verfahrens bis zum Bilden des Intensitätsverhältnisses für eine oder mehrere Materiemengen anderer optischen Dichte ebenfalls durchzuführen. Der Schritt b) (siehe Anspruch 1) wird jedoch beibehalten. Die Intensitätsverhältnisse der weiteren Materiemengen können dann ebenfalls mit Hilfe der Kennkurve entsprechenden Brechzahlen zugeordnet werden. Über einen Vergleich der weiteren Messpunkte mit dem nicht eindeutig zuzuordnenden Messpunkt kann dann die gesuchte Brechzahl ausgewählt beziehungsweise bestimmt werden.

Mit dem dargestellten Verfahren ist es erstmals möglich, auf einfache Art und Weise den Brechungsindex, insbesondere bei kleinsten Materialmengen bzw. Materiestrukturen zu bestimmen.

Mit Vorteil ist hierbei ferner vorgesehen, einen Lichtstrahl in Form eines Gauß'schen Strahls zu verwenden. Die nur lokale Wirkung des Gauß'schen Strahls hat den höchst positiven Effekt, dass die Intensitäten der Beugungsmaxima eine verstärkte Abhängigkeit von den Eigenschaften der die Beugungsstruktur ausmachenden Materie zeigen. Ursächlich dafür ist die physikalische Tatsache, dass die Streuung bzw. Beugung neben der geometrischen Struktur der Materie auch von der optischen Dichte der Materie abhängig ist.

Zur Bestimmung des Intensitätsverhältnisses zwischen zwei Beugungsmaxima werden daher vorzugsweise höhere Beugungsordnungen verwendet. Ein weiterer Grund hierfür ist allerdings auch, dass Beugungsintensitäten höherer Ordnung, wenn überhaupt, nur einen geringen Anteil an ungebeugtem Streulicht aufweisen. Dies schließt im Rahmen der Meßgenauigkeit aber nicht aus, auch das Beugungsmaximum der nullten und der ersten Ordnung zur Bildung eines oder des zur Bestimmung des Brechungsindex notwendigen Intensitätsverhältnisses zu benutzen.

Im Rahmen des erfindungsgemäßen Verfahrens hat sich ferner als vorteilhaft ergeben, wenn das verwendete Licht eine definierte Polarisationsrichtung aufweist. Dies bringt insbesondere bei der theoretischen Bestimmung der Beugungsintensitäten bzw. deren Verhältnisse wesentliche Vereinfachungen mit sich. Dabei wird erfindungsgemäß entweder TE- oder TM-polarisiertes Licht verwendet, d.h. entweder horizontal oder vertikal polarisiertes Licht.

In besonders vorteilhafter Weiterbildung des Erfindungsgegenstands bietet sich zur Bestimmung des Brechungsindex ein Beugungsgitter als Streuanordnung an. Beugungsgitter haben zum einen den Vorteil, dass sie experimentell hergestellt werden können und dass sie zum anderen theoretisch sehr gut erfassbar bzw. mathematisch darstellbar sind. Dementsprechend umfassen erfindungsgemäß die Gitterstäbe das auf den Brechungsindex hin zu untersuchende Material. In diesem Zusammenhang steht auch die Verwendung von Licht mit einem Gauß'schen Intensitätsprofil, da dadurch neben den bereits geschilderten experimentellen Vorteilen auch Vereinfachungen bei der mathematischen beziehungsweise numerischen Bestimmung der Beugungsintensitätsverteilung erzielt werden können. Im Ergebnis führt die Verwendung eines Beugungsgitters höchst vorteilhaft insbesondere und vor allem dazu, dass eine echte Vergleichbarkeit zwischen den theoretisch bestimmten Werten und den experimentellen Werten sichergestellt werden kann.

Die Messung der Beugungsintensitäten erfolgt erfindungsgemäß im Fernfeld der Beugungsstruktur bzw. des Gitters. Hierbei konnte im Rahmen der Erfindung mit Vorteil festgestellt werden, dass im Rahmen der Meßgenauigkeit die Annahme gerechtfertigt ist, dass es sich bei der Streuanordnung in Form eines Gitters um eine im wesentlichen zweidimensionale Struktur handelt, d.h. es kann von einer unendlichen Längenausdehnung der Stäbe ausgegangen werden kann, was wiederum erhebliche Vereinfachungen bei der theoretischen beziehungsweise numerischen Bestimmung der Beugungsintensitätsverteilung mit sich bringt. Fernfeld bedeutet in diesem Zusammenhang, dass die Größe des Gitters sehr viel kleiner ist als der Messabstand, in dem die Messung der Intensitätsmaxima beziehungsweise Intensitätsverteilung erfolgt.

Die im Rahmen des erfindungsgemäßen Verfahrens durchgeführte Messung der Intensitätsverhältnisse bzw. der Beugungsverteilung kann höchst vorteilhaft sowohl in Transmission als auch in Reflexion durchgeführt werden, wobei nach einer bevorzugten Ausführungsform das von der Streuanordnung transmittierte Licht gemessen bzw. detektiert wurde.

Grundsätzlich kann in vorteilhafter Weiterbildung der Erfindung mit dem erfindungsgemäßen Verfahren auch bestimmt werden, ob die zu untersuchende Materie eine homogene oder eine inhomogene Materieverteilung aufweist. Dies ist insbesondere dann in Betracht zu ziehen, wenn beispielsweise beim Wachsen der Gitterstäbe versucht wurde, diese gezielt inhomogen wachsen zu lassen. Mit dem erfindungsgemäßen Verfahren ist es damit möglich festzustellen, ob die experimentellen Manipulationen hinsichtlich der Materieverteilung in den Stäben erfolgreich waren.

Mit dem erfindungsgemäßen Verfahren ist es höchst vorteilhaft nicht nur möglich, den Realteil einer Brechzahl zu bestimmen, sondern es kann in gleicher Weise der Imaginärteil einer komplexen Brechzahl herausgefunden werden. Hierzu werden erfindungsgemäß zwei unterschiedliche Intensitätsverhältnisse zur jeweiligen Bestimmung der zwei Unbekannten der komplexen Zahlt herangezogen.

Dieser Fall ist von dem bereits oben geschilderten Fall zu unterscheiden, bei dem sich aus der theoretischen Zuordnung des experimentell bestimmten Intensitätsverhältnisses keine eindeutige Zuordnungsmöglichkeit zu einem Brechungsindex ergibt. Eine solche Mehrdeutigkeit kann erfindungsgemäß auf einfache Art und Weise dadurch behoben werden, indem die Intensitätsverhältnisse an unterschiedlichen Streuanordnungen durchgeführt werden, wobei diese auch unterschiedliche Materieverteilungen beinhalten sollten.

Im Rahmen der Erfindung liegt natürlich auch eine Vorrichtung, welche zur Durchführung des oben beschriebenen Verfahrens geeignet ist und hierzu insbesondere eine Einrichtung zur Bereitstellung eines definierten Lichtstrahls zur Bestrahlung einer beugenden und/oder streuenden Materie, eine Detektoreinrichung zur Aufnahme einer von der Materie ausgehenden Beugungsintensitätsverteilung, eine Einrichtung zur Bestimmung des oder der Intensitätsverhältnisse zwischen wenigstens zwei detektierten Beugungsmaxima aus der Beugungsintensitätsverteilung und eine Rechnereinrichtung zur zumindest teilweisen Bestimmung des funktionalen Zusammenhangs zwischen dem Intensitätsverhältnis und der Brechzahl und zur Zuordnung des Intensätsverhältnisse zu der Brechzahl umfasst.

Die Erfindung wird nachfolgend anhand eines Ausführungsbeispiels unter Bezugnahme auf mehrere Zeichnungen beschrieben.

Es zeigen:

Fig. 1    eine schematische Darstellung der Meßanordnung zur Ermittlung der Intensitäten der Beugungsordnungen,

Fig. 2    das Gauß-Intensitätsprofil des bei der Messung verwendeten Lichtes,

Fig. 3    ein gemessenes Beugungsmuster, welches an einem Beugungsgitter gemessen wurde, dessen Stäbe aus Silizium bestehen,

Fig. 4 eine Simulation des Beugungsmusters nach Fig. 3,

Fig. 5 eine Grafik, welche die Abhängigkeit des Quotienten gebildet aus der Intensität des Maximums erster Ordnung und des Maximums zweiter Ordnung vom Brechungsindex der Gitterstäbe darstellt.

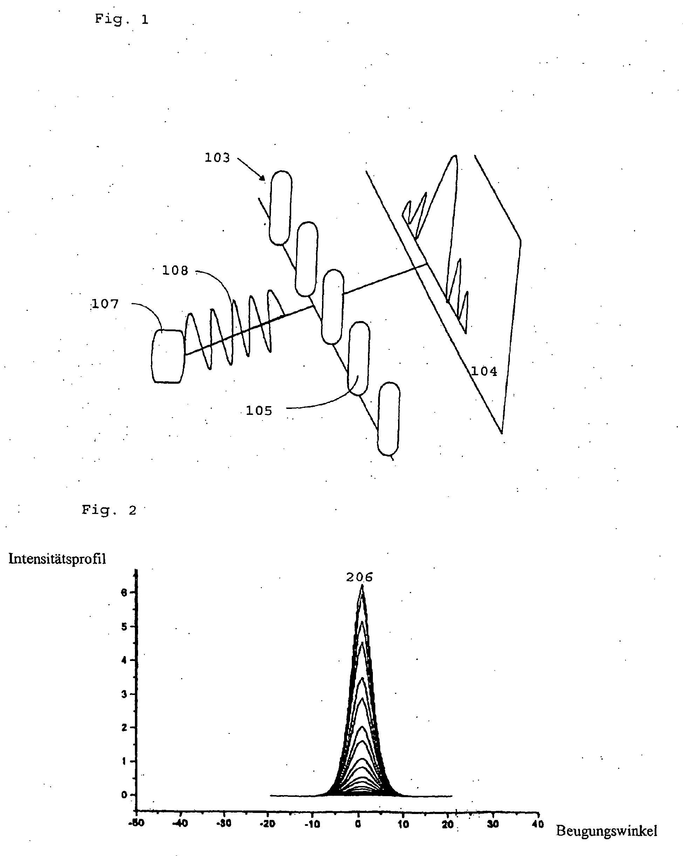

Aus Fig. 1 ist ein Schema der Meßanordnung zu entnehmen, wie sie zur Ermittlung der Intensitäten der Beugungsordnungen im Rahmen der Erfindung zum Einsatz kommen kann. Fig. 1 zeigt in diesem Zusammenhang eine Lichtquelle 107, z.B. einen Laser, dessen monochromatisches Licht über eine optische Faser als räumlich begrenzte Welle 108, beispielsweise in Form eines Gauß'schen Strahls 206 (Fig. 2), auf die beugende Materie 103 gesandt wird. Die in Fig. 1 dargestellte Materie 103 wurde erfindungsgemäß so gewachsen, dass die Materie in ihrer geometrischen Anordnung ein Beugungsgitter ausbildet, welches mathematisch sehr gut erfassbar bzw. darstellbar ist. Die Art der räumlichen Verteilung der Materiemenge 103 wird manchmal auch als Motivfunktion bezeichnet. Mit Bezug auf eine Gitteranordnung 103 wäre zum Beispiel unter Motivfunktion die räumliche Verteilung der Materie innerhalb einer Gitterperiode zu verstehen. Wobei die Gitterstäbe 105 jeweils zentral in der Gitterperiode angeordnet sind und die Länge einer Periode dem Abstand zwischen zwei Stäben 105 entspricht. Durch Streuung bzw. Beugung an der Materie 103 wird eine Intensitätsverteilung des Lichtes im Fernfeld 104 erzeugt, welche mit Hilfe eines räumlich gut auflösenden Detektors dort vermessen wird. Fernfeld bedeutet in diesem Zusammenhang, dass der Abstand zwischen Detektor und beugender Materie sehr viel größer ist als die Breite des durch die Materie gebildeten Gitters. Bei der eben beschriebenen Messung handelt es sich um eine sogenannte Transmissionsmessung, die allerdings auch durch eine Reflexionsmessung ersetzt werden kann.

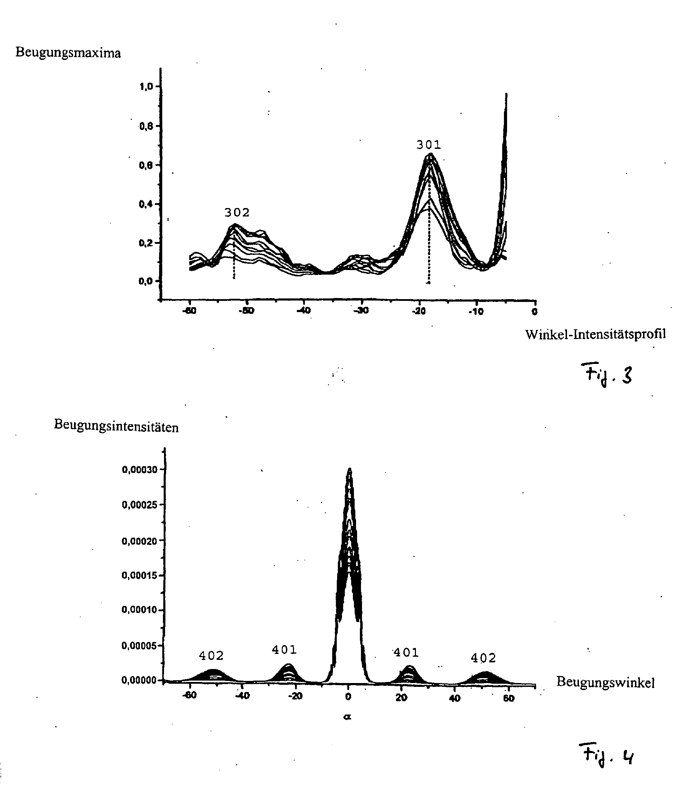

Aus Fig. 3 ist eine gemessene Beugungsintensitätsverteilung im Fernfeld zu entnehmen. Das Diagramm nach Fig. 3 zeigt den Kurvenverlauf der Beugungsmaxima für verschiedene Intensitäten des eingestrahlten Lichtes. Dabei wurde die Intensität in beliebigen Einheiten über den Beugungswinkeln aufgetragen. Gemessen wurde das Beugungsmuster an einer Siliziumprobe, die insgesamt 11 Gitterstäbe umfasste, welche in einem Abstand von 4μm voneinander angeordnet waren und einen Radius von 290nm aufweisen. Der Messabstand zur Probe betrug 18,5cm. Aus der Darstellung nach Fig. 3 ist von rechts nach links das Beugungsmaximum erster Ordnung 301 und das der zweiten Ordnung 302 zu entnehmen. Bestrahlt wurde hierbei die Probe mit einem in einer optischen Faser geführten Laserstrahl, dessen Winkel-Intensitätsprofil aus Fig. 2 entnommen werden kann. Dieses Gauß-Profil wurde ebenfalls in einem Abstand von 18,5cm vermessen. Der Gauß'sche Strahl hatte eine Wellenlänge von 1,5 μm und eine Halbwertsbreite von 5,4μm.

Im Rahmen des erfindungsgemäßen Verfahrens wurde unter anderem durch numerische Auswertung der nach Fig. 3 dargestellten Intensitätsmaxima deren Intensitätsverhältnis ermittelt. Grundsätzlich nicht notwendig, aber möglicherweise zur Erlangung einer höheren Genauigkeit, kann beispielsweise auch noch das Verhältnis zwischen dem Maximum nullter Ordnung und dem der ersten Ordnung herangezogen werden.

Um eine Aussage über den Einfluss des Brechungsindex auf die Beugungsintensitäten zu erhalten, werden nach der Erfindung in numerischer Simulation die Beugungsintensitäten an der periodisch brechenden Struktur bestimmt.

Die Simulation basiert dabei auf Lösungsansätzen zur vollständigen Lösung der Helmholtz-Gleichung mit Randbedingungen.

Dabei wird zur Beschreibung des einfallenden Gauß'schen Strahls die nachfolgende Formel verwendet:

$$E^i(x,y) = \frac{\alpha}{\sqrt{\pi}} \int_{-\theta_{max}}^{\theta_{max}} \exp\left\{-\alpha^2 \sin^2\theta + i\frac{2\pi}{\lambda}\left[(x-x_G)\cos\theta + (y-y_G)\sin\theta\right]\right\}\cos\theta \, d\theta \; ;$$

$$\alpha = \frac{\pi w_0}{\lambda}$$

$\lambda$ ... Wellenlänge des Lichtes, $w_0$ ... Fleckweite, $x_G$, $y_G$ ... Koordinaten des Zentrums des Gauß'schen Strahls und für das gestreute Lichtfeld folgender Ansatz gewählt:

$$E^s = \sum_{m=1}^{M} E_m^s \; ; \qquad E_m^s = \sum_l t_l^{(m)} H_l^{(1)}\left(\frac{2\pi}{\lambda} r_m\right)\exp(il\varphi_m)$$

Für das Lichtfeld innerhalb der Zylinder, das heißt der Gitterstäbe, wurde aufgrund deren Zylinderform ein Fourier-Besselfunktionen enthaltender Lösungsansatz verwendet:

$$E_m^c = \sum_l u_l^{(m)} J_l(n_c \frac{2\pi}{\lambda} r_m) \exp(il\varphi_m)$$

Der Index m in den jeweiligen Lösungsansätzen geht nacheinander über alle Zylinder. Wobei in vorliegendem Ausführungsbeispiel ihre Gesamtzahl auf M = 11 begrenzt war.
Die weiteren bei den Ansätzen verwendeten Variablen können wie folgt zugeordnet werden:

$r_m$, $\varphi_m$ .... lokale Polarkoordinaten im $m$-ten Zylinder
$n_c$ .... zu bestimmende Brechzahl

$J_l$ und $H_l^{(1)}$ ...... Besselsche und Hankelsche Funktionen $l$-ter Ordnung und

$u_l^{(m)}$ , $t_l^{(m)}$ ..... komplexe unbekannte Variable

Die nachfolgenden Randbedingungen ergeben sich aus der physikalischen Tatsache, dass der Übergang des Lichtfelds von außen in die Zylinder sowohl stetig als auch differenzierbar verläuft:

$$E_m^c = E_s + E_i \qquad\qquad \frac{\partial E_m^c}{\partial r} = \frac{\partial E_s}{\partial r} + \frac{\partial E_i}{\partial r}$$

Es handelt sich hierbei um insgesamt 2M Randbedingungen, nämlich für jeden Zylinderrand zwei. Wenn man obige Formeln in diese Randbedingungen einsetzt, erhält man nach einigen Umformungen ein riesiges lineares komplexes Gleichungssystem für die Unbekannten $u_l^{(m)}$ , $t_l^{(m)}$ . Das Gleichungssystem läßt sich nach der Unbekannten $t_l^{(m)}$ auflösen. Auf diese Weise lassen sich für verschiedene Werte der Brechzahl $n_c$ die gewünschten Intensitäten $I_s = E_s^2$ im Fernfeld berechnen.

Schließlich erhält man nach der erfindungsgemäßen Simulation die Beugungsintensitäten im Fernfeld in Abhängigkeit von den Beugungswinkeln. Ein so berechnetes Beugungsmuster ist Fig. 4 zu entnehmen. Es handelt sich dabei um eine Simulation, bei der ferner angenommen wurde, dass es sich bei dem eingestrahlten Licht um Transversalelektrisches Licht handelt. Wellenlänge und Halbwertsbreite des Lichtes stimmen mit dem oben angegebenen Gauß-Profil überein. Gleiches gilt auch für das zu untersuchende Gitter. Aus der besagten Simulation kann man nun für den zugrunde gelegten Brechungsindex den Quotienten aus der Beugungsintensität erster Ordnung 401 und der zweiten Ordnung 402 bilden. Wird die Simulation für eine Mehrzahl an verschiedenen Brechungsindizes wiederholt, so lässt sich auf diese Weise der konkrete funktionale Zusammenhang zwischen dem Verhältnis der Intensitäten der Beugungsmaxima 401, 402 und den entsprechenden Brechzahlen bestimmen.

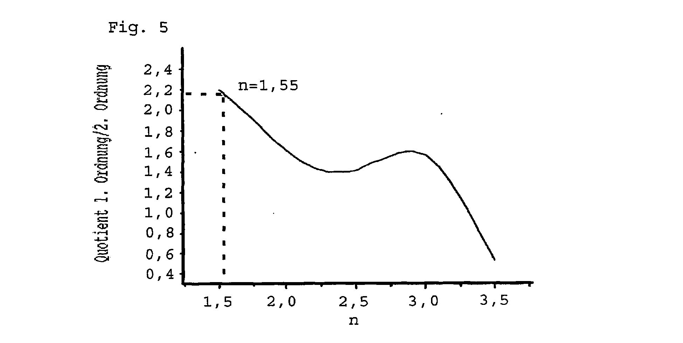

Aus Fig. 5 kann ein Diagramm entnommen werden, das genau diese Abhängigkeit zeigt. Der dort dargestellte Kurvenverlauf bezieht sich insbesondere auf das Maximaverhältnis der ersten und zweiten Beugungsordnung 401, 402 (Fig. 4) in Abhängigkeit von verschiedenen Brechungsindizes. Wie dem Kurvenverlauf zu entnehmen ist, können für bestimmte Intensitätsverhältnisse mehrere Möglichkeiten der Zuordnung zu einem Brechungsindex existieren. Dies hat zur Folge, dass es erfindungsgemäß unter Umständen notwendig werden kann, dass zur eindeutigen Bestimmung einer Brechzahl für eine bestimmte Materialmenge mehrere Messungen an Proben mit unterschiedlicher optischer Dichte notwendig sind. Diese zusätzlichen Messungen dienen im wesentlichen dazu, das Krümmungsverhalten der durch den funktionalen Zusammenhang bestimmten Kurve festzustellen, um auf diese Weise eine eindeutige Zuordnung des gemessenen Intensitätsverhältnisses zu einem Brechungsindex zu ermöglichen.

Wie dem Diagramm nach Fig. 5 zu entnehmen ist, wurde für die hier untersuchte Materialmenge bei einem Intensitätsverhältnis der ersten und zweiten Ordnung von ca. 2,15 ein Brechungsindex von n = 1,55 festgestellt.

**Patentansprüche**

1. Verfahren zur Bestimmung einer Brechzahl für Materiemengen oder Materiestrukturen im Mikrobereich, welches folgende Schritte umfasst:

   a) Bereitstellen einer Materiemenge in Form einer theoretisch erfassbaren Beugungs- und/oder Streuanordnung,
   b) Festlegen von zwei oder mehreren Beugungsordnungen zum Bilden wenigstens eines Intensitätsverhältnisses,
   c) Erzeugen wenigstens einer Intensitätsverteilung durch Bestrahlen der Streuanordnung mit einem Lichtstrahl definierter Form, **gekennzeichnet durch** die folgenden Schritte:
   d) Bilden des Intensitätsverhältnisses oder der Intensitätsverhältnisse unter Verwendung der Beugungsordnungen der Intensitätsverteilung,
   e) Bestimmen zumindest eines Abschnitts einer Kennkurve des funktionalen Zusammenhangs zwischen dem Intensitätsverhältnis und der Brechzahl,
   f) Zuordnen des gebildeten Intensitätsverhältnisses zu der Brechzahl vermittels der Kennkurve, wobei im Schritt f) geprüft wird, ob das gebildete Intensitätsverhältnis eindeutig einer Brechzahl zugeordnet werden kann, ist dies nicht der Fall sind nachfolgende Schritte ferner durchzuführen:

      aa) Durchführen der Schritte a) bis d) des Verfahrens für eine oder mehrere weitere Materiemengen anderer optischer Dichte unter Beibehaltung von Schritt b),
      bb) Zuordnen der weiteren Intensitätsverhältnisse zu deren Brechzahlen vermittels der Kennkurve, und
      cc) Zuordnen der Brechzahl zu der Materiemenge.

2. Verfahren nach Anspruch 1, **dadurch gekennzeichnet, dass** der Lichtstrahl eine Gauß'sche Strahlenform umfasst.

3. Verfahren nach Anspruch 1 oder 2, **dadurch gekennzeichnet, dass** das Licht monochromatisches und/oder polarisiertes Licht umfasst.

4. Verfahren nach einem der vorhergehenden Ansprüche, **dadurch gekennzeichnet, dass** das Intensitätsverhältnis aus Beugungsmaxima höherer Ordnung gebildet werden.

5. Verfahren nach einem der vorhergehenden Ansprüche, **dadurch gekennzeichnet, dass** die Streuanordnung ein Beugungsgitter umfasst.

6. Verfahren nach einem der vorhergehenden Ansprüche, **dadurch gekennzeichnet, dass** die Intensitätsverhältnisse aus der Beugungsverteilung im Fernfeld bestimmt werden.

7. Verfahren nach einem der vorhergehenden Ansprüche, **dadurch gekennzeichnet, dass** die Streuanordnung eine im Wesentlichen zweidimensionale Anordnung von Stäben umfasst.

8. Verfahren nach einem der vorhergehenden Ansprüche, **dadurch gekennzeichnet, dass** die Messung der Intensitätsverhältnisse bzw. der Beugungsverteilung in Transmission oder in Reflexion durchgeführt wird.

9. Verfahren nach einem der vorhergehenden Ansprüche, **dadurch gekennzeichnet, dass** die Materie eine homogene oder eine inhomogene Materieverteilung aufweist.

10. Verfahren nach einem der vorhergehenden Ansprüchen, **dadurch gekennzeichnet, dass** mit dem Verfahren die komplexe Brechzahl aus Imaginär- und Realteil bestimmbar ist.

11. Verfahren nach einem der vorhergehenden Ansprüche, **dadurch gekennzeichnet, dass** ein Gaußscher Lichtstrahl einer Wellenlänge auf eine beugende Materiemenge in geometrischer Anordnung mit einer mathematisch darstellbaren Motivfunktion, zum Beispiel in Form eines Beugungsgitters, gerichtet wird und die Beugungsintensitätsverteilung im Fernfeld in Transmission vermessen wird, wobei außer dem ungebeugten Strahl mindestens ein weiteres Maximum der Intensitäten der Maxima der nullten zur ersten Ordnung und der ersten zur zweiten Ordnung gebildet wird und diese mit berechneten Funktionswerten der Intensitätsverhältnisse verglichen werden, welche durch Berechnung der Beugungsintensitäten an der mathematische definierten Struktur erhalten wurden, wobei der Brechungsindex der Materie in der Motivfunktion variiert wurde und das Intensitätsverhältnis der Beugungsordnungen über dem Brechungsindex eine eindeutige Abhängigkeit besitzt und durch Vergleich der gemessenen Intensitätsverhältnisse und der berechneten Werte der Intensitätsverhältnisse der Ordnungen der Brechungsindex der vorliegenden Materie ermittelt wird.

**Claims**

1. Method for determining a refractive index, comprising the following steps:

   a) providing an amount of matter in a form of a theoretically measurable diffraction- and/or scattering pattern;
   b) defining at least two orders of diffraction to form at least one intensity ratio;
   c) generating at least one intensity distribution by irradiating the scattering pattern using a light beam of a defined form, **characterised by** the following steps:
   d) forming the intensity ratio or intensity ratios using the orders of diffraction of the intensity distribution;
   e) determining at least one portion of a characteristic curve of a functional relationship between the intensity ratio and the refractive index,
   f) assigning the intensity ratio formed to the refractive index using the characteristic curve, wherein step f) includes determining whether the intensity ratio formed is uniquely assignable to the refractive index, and if not, performing the following additional steps:

   aa) performing steps a) through d) of the method for one or more additional amounts of matter of different optical density, retaining step b),
   bb) assigning the additional intensity ratio to its respective refractive index by means of the characteristic curve, and
   cc) assigning the refractive index to the amount of matter.

2. Method according to claim 1, **characterised in that** the light beam has a Gaussian beam shape.

3. Method according to claim 1 or 2, **characterised in that** the light comprises monochromatic and/or polarised light.

4. Method according to one of the preceding claims, **characterised in that** the intensity ratio is derived from higher order diffraction maxima.

5. Method according to one of the preceding claims, **characterised in that** the scatter pattern comprises a diffraction grating.

6. Method according to one of the preceding claims, **characterised in that** the intensity ratio is determined from the diffraction distribution in the far field.

7. Method according to one of the preceding claims, **characterised in that** the scatter pattern comprises an essentially two-dimensional arrangement of rods.

8. Method according to one of the preceding claims, **characterised in that** the intensity ratios and/or the diffraction distribution is measured during transmission or during reflection.

9. Method according to one of the preceding claims, **characterised in that** the matter has a homogeneous or an inhomogeneous matter distribution.

10. Method according to one of the preceding claims, **characterised in that** the method can be used to determine the complex refractive index from an imaginary part and a real part.

11. Method according to one of the preceding claims, **characterised in that** a Gaussian light beam of one wavelength is directed at a diffracting amount of matter in a geometric pattern with a mathematically representable motif function, for example in the form of a diffraction grating, and the diffraction intensity distribution is measured in the far field, in transmission, while apart from the undiffracted beam, at least one further maximum of intensities of a maxima of the zeroeth order to the first order and of the first order to a second order being formed, and these being compared with calculated functional values of the intensity ratios calculated from the diffraction intensities on the mathematically defined structure, while the refractive index of the matter has been varied in the motif function and the intensity ratio of the orders of diffraction to the refractive index have a unique dependency, and the refractive index of the matter in question is determined by comparing the measured intensity ratios and the calculated values of the intensity ratios of the orders.

## Revendications

1. Procédé pour déterminer l'indice de réfraction de quantités ou de structures microscopiques de matière par les étapes suivantes :

   a) Mise à disposition de quantités de matière dans un dispositif de diffraction et/ou de dispersion, capable d'une description théorique.
   b) Définition de deux ordres de diffraction, ou plus, afin de calculer au moins un rapport d'intensité,
   c) Obtention d'au moins une distribution d'intensité en exposant le dispositif de diffraction à un rayon lumineux de forme définie, **caractérisé par** les étapes suivantes :
   d) Calcul du rapport ou des rapports d'intensité en utilisant des ordres de diffraction de la distribution d'intensité,
   e) Détermination, d'au moins une partie d'une courbe caractéristique de la relation fonctionnelle entre le rapport d'intensité et l'indice de réfraction,
   f) Établissement d'une correspondance entre le rapport d'intensité calculé et l'indice de réfraction, à l'aide de la courbe caractéristique, en vérifiant dans l'étape f), si le rapport d'intensité calculé correspond de façon univoque à un indice de réfraction et, si tel n'est pas le cas, en procédant, en outre, aux étapes suivantes :

      aa) Réalisation des étapes a) à d) du procédé pour une ou plusieurs quantités de matière supplémentaire d'une densité optique différente, tout en maintenant l'étape b),
      bb) Établissement, pour chacun des rapports d'intensité supplémentaires, de la correspondance avec leurs indices respectifs de réfraction, à l'aide de la courbe caractéristique,
      cc) Attribution de l'indice de réfraction à la quantité de matière.

2. Procédé suivant la revendication 1, **caractérisé en ce que** le rayon de lumière a une forme de type Gauss.

3. Procédé suivant la revendication 1 ou 2, **caractérisé en ce que** la lumière comprend une lumière monochrome et/ou polarisée.

4. Procédé suivant l'une des revendications précédentes, **caractérisé en ce que** le rapport d'intensité peut être obtenu à partir des maxima de diffraction d'ordres supérieurs.

5. Procédé suivant l'une des revendications précédentes, **caractérisé en ce que** le dispositif de dispersion comprend un réseau de diffraction.

6. Procédé suivant l'une des revendications précédentes, **caractérisé en ce que** les rapports d'intensité sont déterminés à partir de la distribution de la diffraction dans la zone de Fraunhofer.

7. Procédé suivant l'une des revendications précédentes, **caractérisé en ce que** le dispositif de dispersion est essentiellement composé d'un agencement deux dimensionnel de tiges

8. Procédé suivant l'une des revendications précédentes, **caractérisé en ce que** la mesure des rapports d'intensité ou de la distribution de diffraction est effectuée en transmission ou en réflexion.

9. Procédé suivant l'une des revendications précédentes, **caractérisé en ce que** la matière présente une distribution de matière homogène ou inhomogène.

10. Procédé suivant l'une des revendications précédentes, **caractérisé en ce qu'**il permet de déterminer l'indice de réfraction complexe à partir de ses composants imaginaire et réel.

11. Procédé suivant l'une des revendications précédentes, **caractérisé en ce que**

    - l'on dirige un rayon de lumière de type Gauss d'une longueur d'onde sur une quantité de matière pouvant la diffracter, disposée selon un motif géométrique capable d'être décrit par une fonction mathématique, par exemple ayant la forme d'un réseau de diffraction, et que

- l'on mesure la distribution de l'intensité de diffraction dans la zone Fraunhofer en transmission, et

- se forme, outre le rayon non réfracté, au moins un autre maximum des intensités de l'ordre zéro à l'ordre un, et de l'ordre un à l'ordre deux,

- l'on compare ceux-ci aux valeurs calculées des fonctions de rapports d'intensité obtenus par calcul des intensités de diffraction pour la structure ayant une définition mathématique, par variation de l'indice de réfraction de la matière dans la fonction du motif,

- les rapports d'intensité des ordres de diffraction sont une fonction univoque de l'indice de réfraction, et

- que l'on détermine l'indice de réfraction de la matière concernée en comparant les rapports d'intensité mesurés avec les valeurs calculées des rapports d'intensité des ordres.

Fig. 1

Fig. 2

Intensitätsprofil

Beugungswinkel

Beugungsmaxima

Winkel-Intensitätsprofil

Fig. 3

Beugungsintensitäten

Beugungswinkel

Fig. 4

Fig. 5